# EUROPEAN PATENT APPLICATION

(11) **EP 4 712 210 A1**
(43) Date of publication of application: **18.03.2026**
(21) Application number: 25184729.9
(22) Date of filing: 24.06.2025
(51) Int. Cl.: H01M 10/6555, H01M 10/613, H01M 10/647, H01M 50/211, H01M 50/367, H01M 10/658, H01M 50/271

(54) **BATTERY MODULE**

(30) Priority: 13.09.2024 KR 20240126013
(71) Applicant: Hyundai Mobis Co., Ltd., Gangnam-gu Seoul 06141 (KR)
(72) Inventor: KIM, Tae Hong, 16891 Yongin-si (KR); KIM, Yong Jung, 16891 Yongin-si (KR)
(74) Representative: Vossius & Partner Patentanwälte Rechtsanwälte mbB

(57) **Abstract**

The battery module includes: a cell unit including at least one battery cell; at least two cooling plates tightly attached to two opposite surfaces of the cell unit, respectively; and a refractory material pad configured to surround the at least two cooling plates.

## Description

### CROSS-REFERENCE TO RELATED APPLICATION

This application claims priority to and the benefit of Korean Patent Application No. 10-2024-0126013, filed on September 13, 2024, in the Korean Intellectual Property Office, the entire disclosures of which are incorporated herein by reference.

### BACKGROUND

### 1. Field of the Invention

The present disclosure relates to a battery module, and more particularly, to a battery module that may prevent an explosion of a battery module unit in the event of thermal runaway in a high-capacity pouch cell, prevent the spread of a fire by venting gases, and minimize damage caused by a fire as much as possible by minimizing the occurrence of a fire by preventing heat from being transferred from any one battery cell to surrounding battery cells.

### 2. Discussion of the Related Art

A secondary battery refers to a battery that may be charged and discharged, unlike a primary battery that cannot be charged. The secondary batteries are used as power sources of energy storage systems (ESSs), electric vehicles (EVs), and hybrid electric vehicles (HEVs) as well as power sources of small-scale cutting-edge electronic devices such as mobile phones, PDAs, and laptop computers.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell, i.e., a unit battery cell is about 25 V to 42 V.

Therefore, in case that a higher output voltage and a larger energy capacity are required, a plurality of battery cells are connected in series to constitute a battery module, or two or more battery modules are connected in series or parallel and other constituent elements are added to constitute a battery pack.

For example, the battery module refers to a device in which a plurality of secondary batteries are connected in series or parallel, and the battery pack refers to a constituent element in which the battery modules are connected in series or parallel to increase a capacity, an output, and the like.

The number of battery cells included in the battery pack may be variously set depending on a required output voltage or a required charging/discharging capacity.

When the battery cell in the battery module is charged and discharged repeatedly, the battery cell may swell.

The swelling may be caused by various reasons, such as over-charging, over-discharging, or short-circuiting, or the swelling may occur when the battery cell is left unattended at a high temperature. The swelling may lead to decreases in lifespan, capacity, and performance of the secondary battery as well as safety accidents such as ignition and explosion.

In the battery module in the related art, in case that the battery cells are stacked and disposed, the battery cells are disposed to be spaced apart from one another at predetermined intervals, or compression pads, which serve to support the battery cells when the battery cell swells, are disposed between the battery cells.

A thermal runaway phenomenon may occur when a temperature of the battery cell consistently increases and then exceeds a critical temperature because of a problem in which some battery cells in the battery module are shortcircuited.

Aflame or the like, which is generated in some battery cells in the battery module because of the thermal runaway phenomenon, rapidly increases the temperatures of the adjacent battery cells. For this reason, the thermal runaway may rapidly propagate to the adjacent battery cells.

As a result, if the thermal runaway phenomenon occurring in some battery cells is not quickly addressed, the thermal runaway phenomenon may lead to safety accidents such as ignition or explosion of battery modules or battery packs that are battery units having larger capacities than the battery cells.

The battery module includes a housing configured to accommodate and package the battery cells therein and protect the battery cells from external impact and the like. The housing in the related art is manufactured by using a thick steel sheet and serves to safely protect the battery cells from external impact. However, the housing cannot prevent thermal runaway, which occurs in some battery cells, from rapidly propagating to other battery cells.

### SUMMARY

In a general aspect of the present disclosure, the battery module includes: a cell unit including at least one battery cell; at least two cooling plate tightly attached to two opposite surfaces of the cell unit; and a refractory material pad configured to surround the at least two cooling plates.

The battery module may include a top cover disposed on a top surface of a cell stack, in which a plurality of the cell units are stacked in a width direction.

The top cover may be disposed to be spaced apart from the top surface of the cell stack at a predetermined interval such that a gas discharge gap for discharging a vented gas is formed.

The top cover may include a plurality of partition walls disposed on a bottom surface of the top cover facing the cell stack.

The plurality of partition walls may be spaced apart from one another at predetermined intervals such that the gas discharge gap is divided into a plurality of spaces in a width direction of the gas discharge gap.

The top cover may include front and rear covers disposed on front and rear surfaces of the cell stack, which are disposed perpendicular to the bottom side and cover the front and rear surfaces of the cell stack.

The front and rear covers may be disposed to be spaced apart from an outer surface of the cell unit at predetermined intervals such that gas discharge routes are formed between the front and rear covers and the cell unit and communicate with the gas discharge gap for the vented gas to be discharged.

The battery module may further include rupturing portion disposed above the front and rear covers and configured to be at least partially ruptured when gas pressure of the vented gas is equal to or higher than a predetermined pressure such that the vented gas is discharged to outside of the battery module.

The rupturing portion may include a blocking piece configured to cover one side surface of the gas discharge gap to block the plurality of spaces of the gas discharge gap from the outside.

The rupturing portion may include a rupturing piece disposed to have a width smaller than a width of the blocking piece and configured to be ruptured when the gas pressure of the vented gas is equal to or higher than the predetermined pressure such that the blocking piece is separated from the one side surface of the gas discharge gap and the rupturing piece allows the blocking piece to be disposed above each of the front and rear covers.

The refractory material pad may include a first refractory material pad and a second refractory material pad.

The first refractory material pad and the second refractory material pad may be disposed on the two opposite surfaces of the cell unit, respectively.

The refractory material pad may include protruding surfaces protruding in a height direction of the cell unit, formed to be higher in height than the cell unit, and may be bent and disposed to surround a top surface of the cell unit.

Further, refractory tapes may be attached at a plurality of points in a region, in which the protruding surfaces are bent, and surround the top surface of the cell unit.

In addition, the refractory material pad may have an extension surface having a longer height than the cell unit and extending in a height direction, and the extension surface may be bent and surround the two opposite surfaces of the cell unit and the top surface of the cell unit.

Further, refractory tapes may be attached at a plurality of points on a bottom surface of the cell unit disposed opposite to the top surface of the cell unit.

Further, A pair of endplates may be attached to two opposite surfaces of the cell stack to generate a pressing force for activating the cell stack and support the cell stack when swelling occurs.

### BRIEF DESCRIPTION OF THE DRAWINGS

FIG. 1 is an assembled view illustrating a structure in which a cell unit of a battery module according to an embodiment of the present disclosure is assembled.
FIG. 2 is an assembled view illustrating a structure in which a cell unit of a battery module according to another embodiment of the present disclosure is assembled.
FIG. 3 is an exploded perspective view illustrating a state in which the battery module according to the present disclosure is disassembled.
FIG. 4 is a side view illustrating structures of a top cover and a partition wall of the battery module according to the present disclosure.
FIG. 5 is a perspective view illustrating a structure in which a rupturing means of the battery module according to the present disclosure is installed.
FIG. 6 is a top plan view illustrating a structure in which a vented gas is discharged from the battery module according to the present disclosure.
FIG. 7 is an assembled view sequentially illustrating a process of assembling the battery module according to the present disclosure.
FIG. 8 is a flowchart sequentially illustrating a process in which the battery module according to the present disclosure operates.

### DETAILED DESCRIPTION

Hereinafter, a battery module according to an embodiment of the present disclosure will be described with reference to the accompanying drawings.

However, the technical spirit of the present disclosure is not limited to some embodiments described herein but may be implemented in various different forms. One or more of the constituent elements in the embodiments may be selectively combined and substituted for use within the scope of the technical spirit of the present disclosure.

In addition, unless otherwise specifically and explicitly defined and stated, the terms (including technical and scientific terms) used in the embodiments of the present disclosure may be construed as the meaning which may be commonly understood by the person with ordinary skill in the art to which the present disclosure pertains. The meanings of the commonly used terms such as the terms defined in dictionaries may be interpreted in consideration of the contextual meanings of the related technology.

In addition, the terms used in the embodiments of the present disclosure are for explaining the embodiments, not for limiting the present disclosure.

In the present specification, unless particularly stated otherwise, a singular form may also include a plural form. The expression "at least one (or one or more) of A, B, and C" may include one or more of all combinations that can be made by combining A, B, and C.

In addition, the terms such as first, second, A, B, (a), and (b) may be used to describe constituent elements of the embodiments of the present disclosure.

These terms are used only for the purpose of discriminating one constituent element from another constituent element, and the nature, the sequences, or the orders of the constituent elements are not limited by the terms.

Further, when one constituent element is described as being 'connected,' 'coupled,' or 'attached' to another constituent element, one constituent element may be connected, coupled, or attached directly to another constituent element or connected, coupled, or attached to another constituent element through still another constituent element interposed therebetween.

In addition, the expression "one constituent element is provided or disposed above (on) or below (under) another constituent element" includes not only a case in which the two constituent elements are in direct contact with each other, but also a case in which one or more other constituent elements are provided or disposed between the two constituent elements. The expression "above (on) or below (under)" may mean a downward direction as well as an upward direction based on one constituent element.

The present disclosure has been made in an effort to provide a battery module that may prevent an explosion of a battery module unit in the event of thermal runaway in a high-capacity pouch cell, prevent the spread of a fire by venting gases, and minimize damage caused by a fire as much as possible by minimizing the occurrence of a fire by preventing heat from being transferred from any one battery cell to surrounding battery cells.

According to the battery module according to the present disclosure described above, the cooling plates may be disposed on the two opposite sides of the cell unit including the two battery cells, and the refractory material pad may be configured to surround the cell unit, thereby preventing explosion of the battery module unit in the event of thermal runaway in the high-capacity pouch cell.

Further, heat transfer from any one battery cell to the surrounding battery cells may be prevented, and the occurrence of a fire may be minimized, thereby reducing damage caused by the fire as much as possible.

In addition, the gas discharge gap is formed between the top cover and the cell stack formed by stacking the cell units in the width direction, and the discharge routes are formed in the front and rear covers provided at the front and rear sides of the cell stack, such that the vented gas having pressure equal to or higher than the predetermined pressure may be quickly discharged, thereby preventing the spread of the fire.

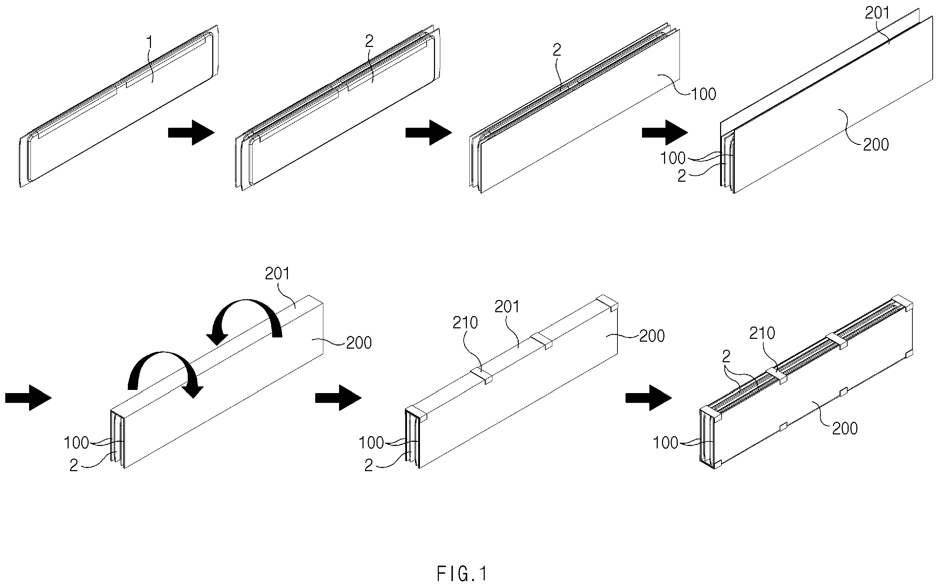

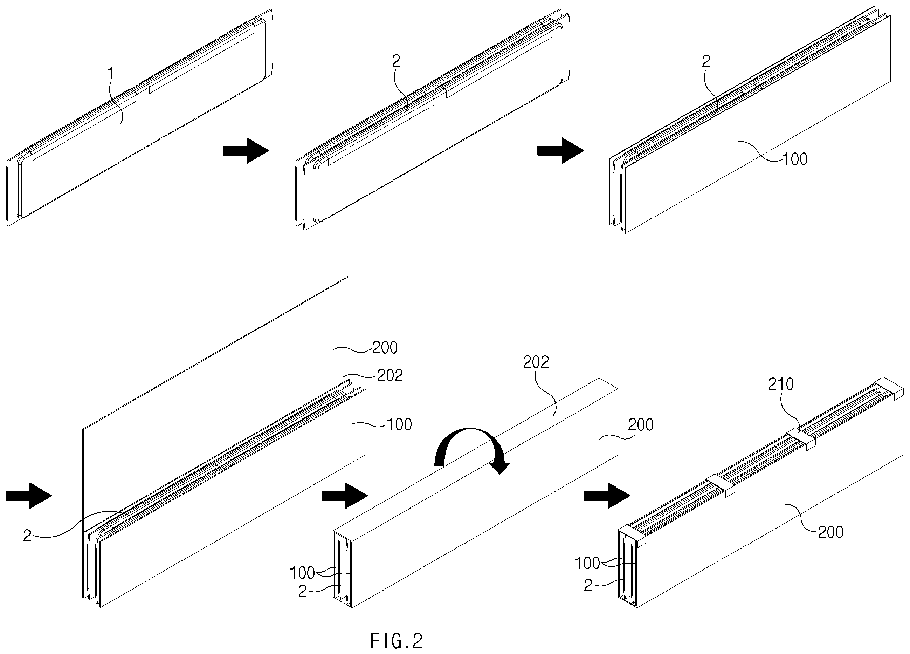

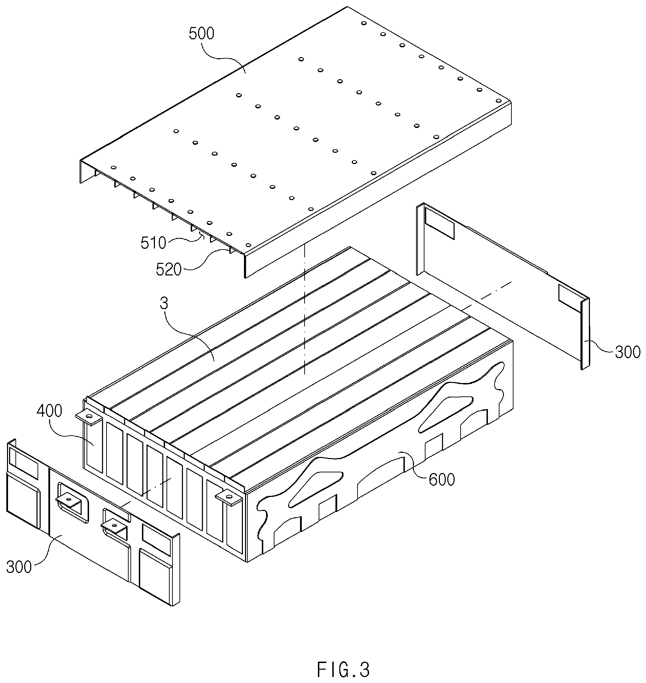

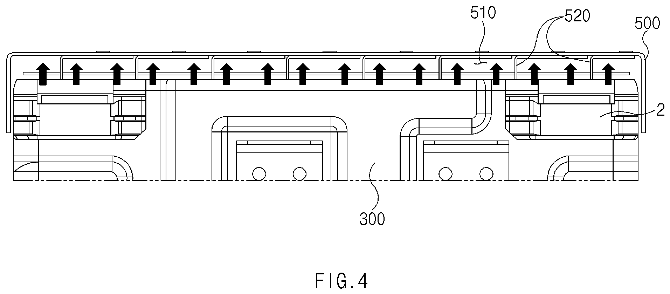

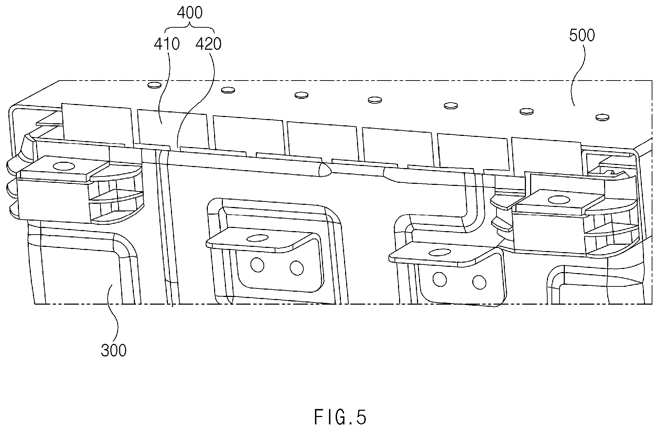

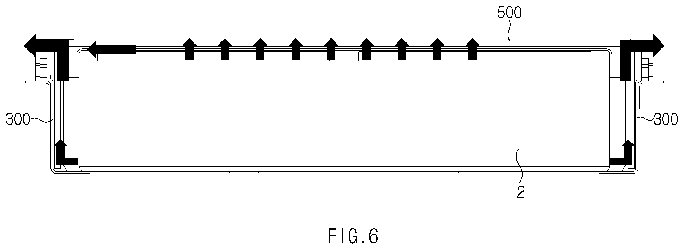

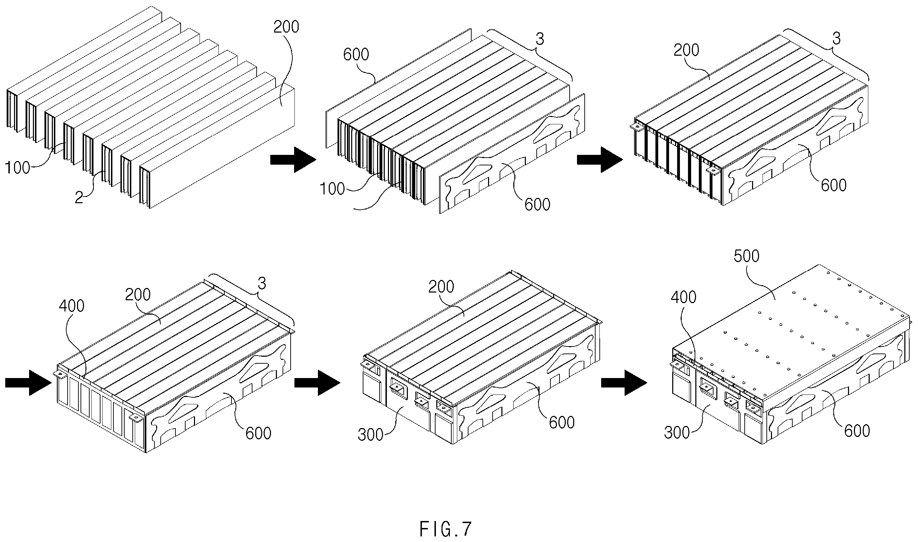

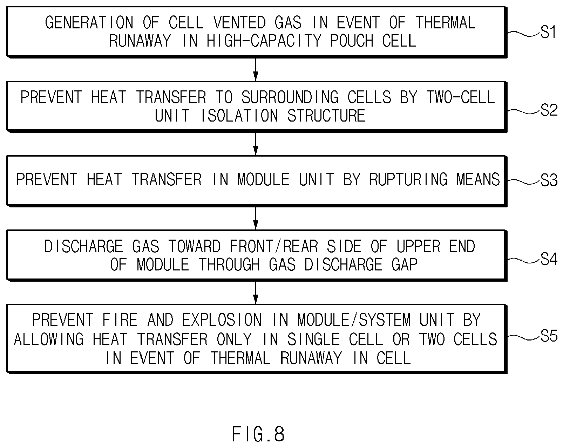

FIG. 1 is an assembled view illustrating a structure in which a cell unit of a battery module according to an embodiment of the present disclosure is assembled, FIG. 2 is an assembled view illustrating a structure in which a cell unit of a battery module according to another embodiment of the present disclosure is assembled, FIG. 3 is an exploded perspective view illustrating a state in which the battery module according to the present disclosure is disassembled, FIG. 4 is a side view illustrating structures of a top cover and a partition wall of the battery module according to the present disclosure, FIG. 5 is a perspective view illustrating a structure in which a rupturing means of the battery module according to the present disclosure is installed, FIG. 6 is a top plan view illustrating a structure in which a vented gas is discharged from the battery module according to the present disclosure, FIG. 7 is an assembled view sequentially illustrating a process of assembling the battery module according to the present disclosure, and FIG. 8 is a flowchart sequentially illustrating a process in which the battery module according to the present disclosure operates.

As illustrated in these drawings, a battery module according to the present disclosure includes a cell unit 2 including one or more battery cells 1, cooling plates 100 tightly attached to two opposite sides of the cell unit 2, and refractory material pads 200 configured to surround the cooling plates 100.

First, as illustrated in FIGS. 1 and 2, the cell unit 2 is configured by stacking one or more battery cells 1 in a width direction. The battery module according to the present disclosure includes a pair of battery cells 1. The battery cell 1 is configured at 180 Ah to constitute a high-capacity pouch cell.

The cooling plates 100 are attached to two opposite surfaces of the cell unit 2 including the pair of battery cells 1. The cooling plate 100 is configured to quickly cool the battery cell 1 by dissipating a large amount of heat generated in the high-capacity pouch cell.

It is effective that the cooling plate 100 has a flat surface, which may be tightly attached to a lateral surface of the battery cell 1, so that a contact area between the cooling plate 100 and the battery cell 1 may be increased, such that the cooling plate 100 may quickly receive heat generated in the battery cell 1.

The cooling plate 100 of the battery module according to the present disclosure may be made of an aluminum material. The cooling plate 100 may, of course, be made of a metallic material, such as gold, silver, and copper, with high thermal conductivity.

The refractory material pads 200 are attached to surround the two opposite surfaces of the cooling plates 100 disposed on the two opposite sides of the cell unit 2 and serve to isolate the cell unit 2, which includes the pair of battery cells 1, by using a refractory material.

The cell unit 2, which includes at least one battery cell 1, is isolated by the refractory material pad 200, such that even in the event of thermal runaway in any one cell unit 2, it is possible to prevent the thermal runaway from propagating to another cell unit 2 positioned adjacent to the cell unit 2.

As illustrated in FIG. 1, in the case of the cell unit 2 of the battery module according to the embodiment of the present disclosure, the refractory material pads 200 are disposed, one by one, on the two opposite surfaces of the cell unit 2. The refractory material pad 200 has a protruding surface 201 protruding in a height direction so as to be higher in height than the cell unit 2, and the protruding surface 201 is bent, such that the protruding surface 201 surrounds a top surface of the cell unit 2.

The refractory material pads 200, which are disposed, one by one, on the two opposite surfaces of the cell unit 2, have the protruding surfaces 201, and the protruding surfaces 201 are bent and overlap each other at two opposite sides, such that the protruding surfaces 201 doubly surround the top surface of the cell unit 2. Therefore, the top surface of the cell unit 2 may be securely isolated.

Further, refractory tapes 210 are attached at a plurality of points in the region in which the protruding surfaces 201 are bent and surround the top surface of the cell unit 2. The refractory tapes 210 may also be attached at a plurality of points on a bottom surface opposite to the top surface.

The refractory tapes 210 are attached at the plurality of points on the top surface of the cell unit 2 and the bottom surface opposite to the top surface. The plurality of refractory tapes 210 may be attached and disposed at equal intervals, thereby securely maintaining the state in which the refractory material pads 200 surround the outer surface of the cell unit 2.

As illustrated in FIG. 2, in the case of the cell unit 2 of the battery module according to another embodiment of the present disclosure, the refractory material pad 200 is disposed to surround the cooling plates 100 disposed on the two opposite sides of the cell unit 2 and has an extension surface 202 formed to be higher in height than the cell unit 2 and extending in the height direction. The extension surface 202 is bent and surrounds the top surface of the cell unit 2 and the other side surface of the cell unit 2 disposed opposite to one side surface of the cell unit 2.

The extension surface 202 is provided on the cell unit 2, and the extension surface 202 has a continuously predetermined height without being cut. The extension surface 202 is bent and surrounds the top surface of the cell unit 2. Therefore, it is possible to consistently maintain the state in which the extension surface 202 surrounds the top surface of the cell unit 2 without attaching a separate component such as the refractory tape 210.

Further, the refractory tapes 210 are attached at a plurality of points on the bottom surface disposed opposite to the top surface.

The refractory tapes 210 are attached at the plurality of points on the bottom surface opposite to the top surface. The plurality of refractory tapes 210 may be attached and disposed at equal intervals, thereby securely maintaining the state in which the refractory material pad 200 surrounds the outer surface of the cell unit 2.

As illustrated in FIGS. 3 and 4, a top cover 500 is installed on a top surface of a cell stack 3, and the top cover 500 is disposed to be spaced apart from the top surface of the cell stack 3 at a predetermined interval so that a gas discharge gap 510, through which a vented gas generated in the event of thermal runaway is discharged, may be formed.

A bottom surface of the top cover 500 and the top surface of the cell stack 3 are spaced apart from each other at a predetermined interval, such that the gas discharge gap 510 is formed in a separation space between the top cover 500 and the cell stack 3. Therefore, the vented gas, which is generated in the event of thermal runaway in the battery cell 1, may be guided to the gas discharge gap 510 and discharged to the outside.

Further, a plurality of partition walls 520 are provided in a width direction of the gas discharge gap 510 and disposed to be spaced apart from one another at predetermined intervals to partition the inside of the gas discharge gap 510 into a plurality of spaces.

The plurality of partition walls 520 may be provided in the gas discharge gap 510 and divide the gas discharge gap 510 into a plurality of spaces. Only the vented gas accommodated in the space, in which gas pressure of the vented gas is equal to or higher than a predetermined pressure among the separated spaces, is discharged to the outside by rupturing means 400, such that a discharge of the vented gas may be minimized, and a thermal runaway phenomenon may be prevented as much as possible.

As illustrated in FIG. 6, front and rear covers 300 are installed on front and rear surfaces of the cell stack 3 to cover the front and rear surfaces of the cell stack 3. The front and rear covers 300 are members configured to block the front and rear sides of the cell stack 3 from the outside by covering the front and rear surfaces of the cell stack 3 in which the plurality of cell units 2 are stacked in the width direction. Inner surfaces of the front and rear covers 300 are spaced apart from the front and rear surfaces of the cell stack 3 at predetermined intervals, such that gas discharge routes (not illustrated), through which the vented gas may be discharged to the outside, may be formed on the inner surfaces of the front and rear covers 300.

The gas discharge route (not illustrated) may communicate with the gas discharge gap 510, such that the vented gas flowing through the gas discharge route may be finally discharged to the outside in a forward/rearward direction of the cell stack 3 through the gas discharge gap 510 formed at the upper side of the cell unit 2.

Meanwhile, as illustrated in FIG. 5, the rupturing means 400 are positioned above the front and rear covers 300, and the rupturing means 400 are at least partially ruptured in case that the gas pressure of the vented gas generated in the event of thermal runaway is equal to or higher than a predetermined pressure, thereby discharging the vented gas to the outside.

The rupturing means 400 includes a blocking piece 410 disposed to be tightly attached to two opposite sides of the gas discharge gap 510 to block the two opposite sides of the separated gas discharge gap 510 from the outside, and a rupturing piece 420 formed to have a width relatively smaller than a width of the blocking piece 410 and configured to be ruptured in case that the gas pressure of the vented gas is equal to or higher than the predetermined pressure so that the blocking piece 410 is withdrawn from the two opposite sides of the gas discharge gap 510, the rupturing piece 420 being configured to fix the blocking piece 410 to an upper portion of each of the front and rear covers 300.

The rupturing means 400 are disposed on the front and rear covers 300 and at least partially ruptured in case that the gas pressure of the vented gas generated in the event of thermal runaway is equal to or higher than the predetermined pressure, thereby discharging the vented gas to the outside.

That is, the rupturing means 400 are disposed on the front and rear covers 300 and block the two opposite sides of the gas discharge gap 510. Therefore, the rupturing means 400 may suppress a discharge of the vented gas to the outside in case that the pressure of the vented gas is not equal to or higher than the predetermined pressure in the gas discharge gap 510, thereby preventing heat from being transferred to the adjacent cell unit 2.

To this end, the blocking piece 410 may be formed as a plate-shaped member having a relatively larger area than the two opposite sides of the gas discharge gap 510 and disposed to be tightly attached to the two opposite sides of the gas discharge gap 510, such that the vented gas accommodated in the gas discharge gap 510 may be prevented from being discharged to the outside as much as possible.

The rupturing piece 420 is a member formed to have a width relatively smaller than a width of the blocking piece 410. The rupturing piece 420 is ruptured or bent in case that the gas pressure of the vented gas is equal to or higher than the predetermined pressure, such that the blocking piece 410 is withdrawn from the two opposite sides of the gas discharge gap 510, and as a result, the vented gas may be discharged through the gas discharge gap 510.

To this end, the rupturing piece 420 may be formed to have a width relatively smaller than a width of the blocking piece 410 or formed to have a thickness smaller than a thickness of the blocking piece 410. Alternatively, the rupturing piece 420 may be made of a material having rigidity lower than rigidity of the blocking piece 410.

A process of assembling the battery module according to the present disclosure will be described below with reference to FIG. 7.

First, the cell stack 3 is formed by stacking, in the width direction, the cell units 2 each configured by stacking the pair of battery cells 1 in the width direction, and then endplates 600 are attached to the two opposite surfaces of the cell stack 3.

The endplates 600 may be attached to the two opposite surfaces of the cell stack 3 and block the two opposite surfaces of the cell stack 3 from the outside, thereby protecting the cell stack 3 from external impact.

Further, the cell stack 3 may generate a pressing force for activating the cell stack 3, and the cell stack 3 may be stably supported even if swelling occurs.

After the endplates 600 are attached to the two opposite surfaces of the cell stack 3, a lead wire is welded, such that a sensing assembly (not illustrated) is assembled. Thereafter, the rupturing means 400 are assembled to the front and rear surfaces of the cell stack 3 to which the endplates 600 are attached.

After the rupturing means 400 are completely assembled, the front and rear covers 300 and a lower clamp (not illustrated) are assembled, and then the top cover 500 is finally assembled. The partition walls 520 are formed in the top cover 500, such that the gas discharge gap 510 having the separated spaces is formed between the top cover 500 and the cell stack 3. As a result, the process of assembling the battery module is completed.

A process of preventing thermal runaway and fire by using the battery module according to the present disclosure configured as described above will be described below with reference to FIG. 8.

First, when a thermal runaway phenomenon occurs in a particular portion of a high-capacity pouch cell, a vented gas is generated in the battery cell. The structure, in which the cooling plates 100 are installed at the two opposite sides of the cell unit 2 including the two battery cells 1 and the cell unit 2 installed with the cooling plates 100 is surrounded by the refractory material pad 200, may primarily prevent heat from being transferred to the adjacent surrounding cell units 2 (S1 and S2).

Further, when the pressure of the vented gas generated by the thermal runaway is equal to or lower than the predetermined pressure, the rupturing means 400, which are installed on the two opposite surfaces of the cell stack 3 in which the cell units 2 are stacked in the width direction, may prevent the vented gas from being discharged to the outside, thereby secondarily preventing the heat transfer in the module unit (S3).

Lastly, when the gas pressure of the vented gas accommodated in the gas discharge gap 510 is equal to or higher than the predetermined pressure as the thermal runaway consistently propagates in the particular cell unit 2, the rupturing pieces 420 of the rupturing means 400 are ruptured or bent by the gas pressure, and the vented gas is quickly discharged toward the front and rear sides of the upper end of the cell stack 3, such that it is possible to prevent explosion or propagation of a fire to the entire cell stack 3 (S4 and S5).

The battery module according to the present disclosure configured as described above may prevent an explosion of the battery module unit in the event of thermal runaway in the high-capacity pouch cell, prevent the spread of a fire by venting gases, and minimize damage caused by a fire as much as possible by minimizing the occurrence of a fire by preventing heat from being transferred from any one battery cell to surrounding battery cells.

While the embodiments, which may be implemented by the present disclosure, have been described above, the embodiments are just illustrative and not intended to limit the present disclosure. It can be appreciated by those skilled in the art that various modifications and applications, which are not described above, may be made to the present embodiment without departing from the intrinsic features of the present embodiment. For example, the respective constituent elements specifically described in the embodiments may be modified and then carried out. Further, it should be interpreted that the differences related to the modifications and applications are included in the scope of the present disclosure defined by the appended claims.

## Claims

1. A battery module comprising:
a cell unit comprising at least one battery cell;
at least two cooling plates tightly attached to two opposite surfaces of the cell unit, respectively; and
a refractory material pad configured to surround the at least two cooling plates.

2. The battery module of claim 1, further comprising a top cover disposed on a top surface of a cell stack, in which a plurality of cell units are stacked in a width direction.

3. The battery module of claim 2, wherein the top cover is disposed to be spaced apart from the top surface of the cell stack at a predetermined interval such that a gas discharge gap for discharging a vented gas is formed.

4. The battery module of claim 2 or 3, wherein the top cover comprises a plurality of partition walls disposed on a bottom surface of the top cover facing the cell stack.

5. The battery module of claim 4, wherein the plurality of partition walls are spaced apart from one another at predetermined intervals such that the gas discharge gap is divided into a plurality of spaces in a width direction of the gas discharge gap.

6. The battery module of claim 4 or 5, wherein the top cover comprises front and rear covers disposed on front and rear surfaces of the cell stack, which are disposed perpendicular to the bottom surface of the top cover and cover the front and rear surfaces of the cell stack.

7. The battery module of claim 6, wherein the front and rear covers are disposed to be spaced apart from an outer surface of the cell unit at predetermined intervals, such that gas discharge routes are formed between the front and rear covers and the cell unit and communicate with the gas discharge gap for the vented gas to be discharged.

8. The battery module of claim 6 or 7, wherein the battery module further comprises rupturing portion disposed above the front and rear covers and configured to be at least partially ruptured when gas pressure of the vented gas is equal to or higher than a predetermined pressure such that the vented gas is discharged to outside of the battery module.

9. The battery module of claim 8, wherein the rupturing portion comprises a blocking piece configured to cover one side surface of the gas discharge gap to block the plurality of spaces of the gas discharge gap from the outside of the battery module.

10. The battery module of claim 8 or 9, wherein the rupturing portion comprises a rupturing piece disposed to have a width smaller than a width of the blocking piece and configured to be ruptured when the gas pressure of the vented gas is equal to or greater than the predetermined pressure such that the blocking piece is separated from the one side surface of the gas discharge gap and the rupturing piece allows the blocking piece to be disposed above each of the front and rear covers.

11. The battery module of any one of claims 1 to 10, wherein the refractory material pad comprises a first refractory material pad and a second refractory material pad.

12. The battery module of claim 11, wherein the first refractory material pad and the second refractory material pad are disposed on the two opposite surfaces of the cell unit, respectively.

13. The battery module of claim 12, wherein the refractory material pad comprises protruding surfaces protruding in a height direction of the cell unit, formed to be greater in height than the cell unit, and are bent and disposed to surround a top surface of the cell unit.

14. The battery module of claim 13, wherein refractory tapes are attached at a plurality of points in a region, in which the protruding surfaces are bent, and surround the top surface of the cell unit.

15. The battery module of any one of claims 12 to 14, wherein the refractory material pad comprises an extension surface formed to be greater in height than the cell unit and extending in a height direction, and the extension surface is bent and surrounds the two opposite surfaces of the cell unit and the top surface of the cell unit.

16. The battery module of claim 13, wherein refractory tapes are attached at a plurality of points on a bottom surface of the cell unit disposed opposite to the top surface of the cell unit.

17. The battery module of claim 15, wherein refractory tapes are attached at a plurality of points on a bottom surface of the cell unit disposed opposite to the top surface of the cell unit.

18. The battery module of any one of claims 2 to 17, further comprising a pair of endplates attached to two opposite surfaces of the cell stack to generate a pressing force for activating the cell stack and support the cell stack when swelling occurs.
